# DEMANDE DE BREVET EUROPEEN

(11) **EP 2 571 216 A1**
(43) Date de publication de la demande: **20.03.2013**
(21) Numéro de dépôt: 11306158.4
(22) Date de dépôt: 16.09.2011
(51) Int. Cl.: H04L 25/49

(54) **Procédé de transmission d'une trame de données en utilisant une modulation à largeurs d'impulsions adaptive**

(71) Demandeur: Gemalto SA, 92190 Meudon (FR)
(72) Inventeur: Marseille, François-Xavier, 92197 MEUDON (FR); Durand, Stéphane, 92197 MEUDON (FR)
(74) Mandataire: Cour, Pierre

(57) **Abrégé**

Les modes de réalisation de la présente invention concernent un procédé de transmission d'une trame de données binaires comportant deux états logiques entre un premier et au moins un deuxième équipement de communication dans lequel les deux états logiques sont codés par une première et une deuxième largeurs d'impulsion distinctes et dans lequel :
- on détermine au sein de la trame le nombre d'apparitions de chaque état logique et,
- on module la trame en largeur d'impulsion de façon à ce que la largeur d'impulsion la plus faible est attribuée à l'état logique ayant le plus grand nombre d'apparitions au sein de la trame.

## Description

La présente invention concerne le domaine des transmissions de données entre deux équipements distants et plus particulièrement les transmissions de données binaires utilisant une modulation à largeurs d'impulsions.

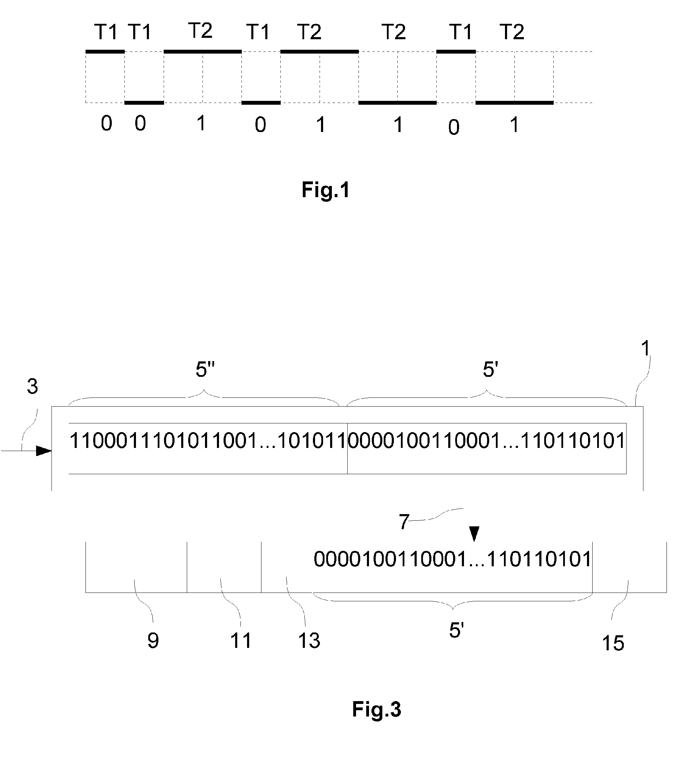

La modulation à largeurs d'impulsions consiste à coder l'état logique « 0 » par une impulsion d'une première largeur (ou durée) T1 et à coder l'état logique « 1 » par une impulsion d'une deuxième largeur (ou durée) T2 comme décrit sur la figure 1.

Néanmoins, afin de bien distinguer la différence entre les deux états logiques et s'affranchir des problèmes de bruit pouvant intervenir lors de la transmission, la différence entre les deux largeurs (ou durées) doit être significative, par exemple une largeur T1 correspondant à une durée T et une largeur T2 correspondant à une durée 2T.

Or, le fait d'avoir une largeur d'impulsion importante entraîne un temps de transmission plus long et réduit donc le débit de la transmission.

La nécessité est donc de proposer un procédé permettant de minimiser la durée de transmission des données afin d'améliorer le débit global de la transmission des données.

Ainsi, la présente invention concerne un procédé de transmission d'une trame de données binaires comportant deux états logiques entre un premier et au moins un deuxième équipement de communication dans lequel les deux états logiques sont codés par une première et une deuxième largeurs d'impulsion distinctes et dans lequel :
- on détermine au sein de la trame le nombre d'apparitions de chaque état logique et,
- on module la trame en largeur d'impulsion de façon à ce que la largeur d'impulsion la plus faible est attribuée à l'état logique ayant le plus grand nombre d'apparitions au sein de la trame.

Selon un autre aspect de la présente invention, la transmission des données se fait par un protocole unifilaire à haut débit.

Selon un aspect supplémentaire de la présente invention, la transmission est bidirectionnelle et en alternance.

Selon un aspect additionnel de la présente invention, l'information correspondant à la convention choisie pour le codage des états logiques est encodée dans un emplacement dédié de la trame transmise.

Selon un autre aspect de la présente invention, la trame comprend un motif de début de trame et dans lequel l'emplacement dédié correspondant à un bit situé juste après le motif de début de trame.

Selon un aspect supplémentaire de la présente invention, les données binaires de la trame passent par une mémoire tampon avant d'être transmises, un comptage du nombre d'apparitions d'au moins un état logique étant réalisé au niveau de la mémoire tampon.

Selon un aspect additionnel de la présente invention, le comptage se fait en parallèle sur différents secteurs distincts de la trame de manière à réduire le temps de comptage.

Les modes de réalisation de la présente invention concernent également un dispositif de transmission comprenant :
- des moyens de détermination du nombre d'apparitions de chaque état logique dans une trame de données à transmettre,
- des moyens de modulation à largeurs d'impulsions pour associer à un premier et un deuxième états logiques respectifs des données binaires de la trame à transmettre, au moins une première et une deuxième largeurs d'impulsions distinctes, l'état logique ayant le plus grand nombre d'apparitions dans la trame étant associé à la largeur d'impulsion la plus faible,
- des moyens d'encodage dans un emplacement dédié de la trame de la convention choisie indiquant la correspondance entre un état logique et une largeur d'impulsion,
- des moyens de transmission d'un signal correspondant à la trame de données vers au moins un dispositif de réception.

Les modes de réalisation de la présente invention concernent aussi un dispositif de réception comprenant
- des moyens de réception d'un signal correspondant à la trame de données transmis par un dispositif de transmission,
- des moyens de décodage de l'information correspondant à la convention choisie indiquant la correspondance entre un état logique et une largeur d'impulsion située dans un emplacement dédié de la trame,
- des moyens de démodulation des données de la trame en fonction de la convention choisie.

Les modes de réalisation de la présente invention concernent également un équipement de communication comprenant un dispositif de transmission et un dispositif de réception tels que décrits précédemment.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un exemple de modulation à largeur d'impulsion pour une suite de données binaires ;
- la figure 2 représente un schéma synoptique des différentes étapes d'un mode de réalisation de la présente invention ;
- la figure 3 représente un schéma de la mise en mémoire tampon et de l'encapsulage des données à transmettre et leur encapsulage dans une trame comprenant des champs structurels ;

Dans la description qui va suivre, on désigne de façon générale:
Les modes de réalisation de la présente invention concernent un procédé de transmission d'une trame de données binaires basée sur une modulation à largeur d'impulsion dans lequel la convention de modulation des états logiques est adaptée en fonction des données de la trame à transmettre.

Ainsi, parmi les deux largeurs d'impulsions distinctes, la largeur d'impulsion la plus faible est attribuée à l'état logique dont le nombre d'apparitions dans la trame de données est le plus important. En conséquence, la largeur d'impulsion la plus importante est attribuée à l'état logique dont le nombre d'apparitions est le plus faible.

Par ailleurs, si le nombre d'apparitions est le même pour les deux états logiques au sein d'une trame, la convention peut alors être choisie de manière arbitraire puisque quelque soit la convention choisie, le temps de transmission sera le même.

Un tel procédé est particulièrement adapté à la transmission de données entre un premier et un au moins un deuxième équipement de communication comprenant par exemple un émetteur-récepteur, c'est à dire une association d'un équipement de transmission et d'un équipement de réception.

Par soucis de simplification, dans la suite de la description, les modes de réalisation décrits se limiteront à une communication entre un premier et un deuxième équipement de communication.

De plus, les modes de réalisation de la présente invention s'adaptent parfaitement à une transmission gérée par un protocole unifilaire haut débit permettant une transmission bidirectionnelle et quasi-simultanée (« full duplex » en anglais) dans lesquelles un unique canal de transmission sert pour les transmissions dans les deux directions.

Dans ces transmissions, le multiplexage peut être temporel, c'est-à-dire que les données sont envoyées à l'alternat d'un premier vers un deuxième équipement de communication et du deuxième vers le premier équipement de communication, l'alternance se faisant par exemple à chaque bit ou à chaque trame.

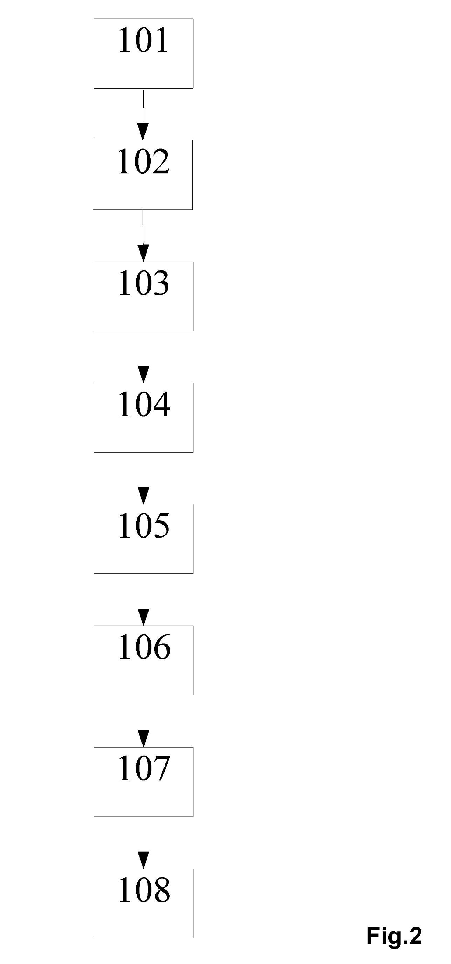

Les différentes étapes du procédé vont maintenant être décrites en détails à partir des références de la figure 2.

La première étape 101 correspond à la mise en mémoire tampon (« buffering » en anglais) des données de la trame à transmettre au niveau d'un premier équipement de communication comprenant par exemple un émetteur-récepteur. En effet, afin de pouvoir compter le nombre d'apparitions d'au moins un état logique (le nombre d'apparitions du deuxième état pouvant logique pouvant être déduit si l'on connaît la taille d'une trame) au sein d'une trame, la trame doit nécessairement être mise entièrement en mémoire tampon.

La figure 3 représente un exemple de mémoire tampon 1 comprenant une entrée 3 sur laquelle sont reçues les trames de données 5.

L'étape 102 correspond au comptage du nombre d'apparitions d'un état logique ('0' ou '1') dans une trame de données binaires par des moyens de comptage comme par exemple un compteur qui scanne les données de la mémoire tampon et détermine le nombre d'apparitions des états logiques.

Ce comptage est réalisé au niveau de la mémoire tampon 1. Cependant, le temps nécessaire à ce comptage est non négligeable et peut ralentir la transmission des données. Afin de réduire ce temps de latence, selon un mode de réalisation de la présente invention, la capacité de la mémoire tampon 1 correspond à au moins deux trames, représentées ici par les trames 5' et 5". On parle aussi d'un enchainement de mémoires tampons. Ainsi, le comptage sur l'une des trames 5" se fait pendant le codage et l'envoi de la trame précédente 5' ce qui permet de masquer le temps de latence dû au comptage.

De plus, afin de réduire le temps nécessaire au comptage, le comptage peut se faire en parallèle et de manière simultanée sur plusieurs secteurs distincts de la trame, la somme des différents secteurs formant la trame complète, par exemple en utilisant plusieurs compteurs qui réalisent le comptage sur un secteur donné. Un secteur peut par exemple correspondre à un groupe de 8 bits. Ainsi, il suffit d'additionner les nombres d'apparitions correspondant à chaque secteur pour connaître le nombre d'apparitions total d'un des états logiques.

Une fois le comptage réalisé, l'étape suivante 103 correspond au choix de la convention pour la modulation et à l'encodage de cette convention dans un champ dédié.

Le choix de la convention dépend du résultat du comptage. Ainsi si le nombre d'apparitions d'un état logique, par exemple le '0' est supérieur à l'autre état logique, c'est-à-dire le '1', alors la convention choisie correspondra à la modulation (ou encodage) des '0' par la largeur d'impulsion T1 la plus faible et à la modulation des '1' par la largeur d'impulsion T2 la plus importante.

Une fois le choix de la convention effectué, ce choix de convention est encodé dans un champ dédié par des moyens d'encodage afin que le récepteur sache à quel état logique correspond chaque largeur d'impulsion T1 et T2.

Ainsi, à la sortie 7 de la mémoire tampon, des champs structurels de la trame sont ajoutées aux données issues de la mémoire tampon 1. Ces champs structurels comprennent par exemple un préambule 9, un indicateur de début de trame 11 et un indicateur de fin de trame 15. Afin d'indiquer au récepteur la convention choisie, on ajoute un champ dédié à la convention de modulation choisie 13 comportant un indicateur de la convention choisie. Ce champ dédié 13 peut être situé juste après l'indicateur de début de trame 11 et juste avant les données de la trame 5'.

Ainsi, l'indicateur de convention choisie correspond par exemple à un bit et indique la convention choisie pour la modulation en largeur d'impulsion. En pratique le codage de la convention peut par exemple correspondre à un codage des '0' par les impulsions de plus faible largeur T1 si le bit de l'indicateur de la convention choisie vaut '0' et un encodage des '1' par les impulsions de plus faible largeur T1 si le bit de l'indicateur de la convention choisie vaut '1'.

Par ailleurs si un émetteur ne comprend pas de moyens de comptage du nombre d'apparitions des états logiques, il peut choisir une convention de modulation de manière arbitraire et indiquer la convention choisie dans le champ dédié de sorte que le signal pourra être démodulé par le récepteur même si l'émetteur n'est pas équipé de moyens de comptage du nombre d'apparitions des états logiques dans une trame.

L'étape suivante 104 correspond à la modulation du signal en largeur d'impulsion suivant la convention choisie par des moyens de modulation à largeurs d'impulsions comme un modulateur.

L'étape 105 correspond à l'envoi, par des moyens de transmission, du signal modulé en largeur d'impulsion d'un premier équipement de communication vers un deuxième équipement de communication. Comme décrit précédemment, l'envoi peut se faire en un seul bloc de données ou peut être réalisé en plusieurs blocs de manière à permettre une transmission quasi-simultanée en alternance en sens inverse dans le cas d'une communication unifilaire à multiplexage temporel.

L'étape 106 correspond à la réception, par des moyens de réception, du signal modulé en largeur d'impulsion par le deuxième équipement de communication.

L'étape 107 correspond au décodage, par des moyens de décodage, du champ dédié à la convention de modulation choisie. Ainsi, en fonction de la convention choisie, le récepteur peut configurer des moyens de démodulation de manière à récupérer les états logiques encodés au niveau du premier équipement de communication en fonction des largeurs d'impulsions.

En pratique, en fonction de la valeur de l'indicateur de convention choisie, on ajuste la position d'un sélecteur comportant deux positions, l'une correspondant à un décodage dans lequel les largeurs d'impulsions les plus faibles correspondent aux '0' et l'autre correspondant à un décodage dans lequel les largeurs d'impulsions les plus faibles correspondent aux '1'.

La dernière étape 108 correspond à la démodulation, par des moyens de démodulation comme par exemple un démodulateur, du signal reçu en fonction de la valeur de l'indicateur de la convention choisie pour récupérer les données binaires transmises.

Ainsi, la détermination du nombre d'apparitions des états logiques dans un trame de données binaires et l'adaptation de la convention de modulation à largeurs d'impulsions en fonction du nombre d'apparitions des états logiques de manière à encoder l'état logique ayant le plus d'apparitions par la largeur d'impulsion la plus faible permet de minimiser la durée de la trame à transmettre ce qui permet d'améliorer le débit de transmission. De plus, cette amélioration du débit est obtenue par des modifications simples des équipements de transmission et réception et nécessite donc un faible investissement pour être mise en oeuvre.

## Revendications

1. Procédé de transmission d'une trame de données binaires comportant deux états logiques entre un premier et au moins un deuxième équipement de communication dans lequel les deux états logiques sont codés par une première et une deuxième largeurs d'impulsion distinctes **caractérisé en ce que** :
- on détermine au sein de la trame le nombre d'apparitions de chaque état logique (102) et,
- on module la trame en largeur d'impulsion de façon à ce que la largeur d'impulsion la plus faible est attribuée à l'état logique ayant le plus grand nombre d'apparitions au sein de la trame (104).

2. Procédé de transmission selon la revendication 1 dans lequel la transmission des données se fait par un protocole unifilaire à haut débit.

3. Procédé de transmission selon la revendication 2 dans lequel la transmission est bidirectionnelle et en alternance.

4. Procédé de transmission selon la revendications 1 dans lequel l'information correspondant à la convention choisie pour le codage des états logiques est encodée dans un emplacement dédié (13) de la trame transmise (103).

5. Procédé de transmission selon la revendication 4 dans lequel la trame comprend un motif de début de trame (11) et dans lequel l'emplacement dédié (13) correspondant à un bit situé juste après le motif de début de trame (11).

6. Procédé de transmission selon la revendication 1 dans lequel les données binaires de la trame passent par une mémoire tampon (1) avant d'être transmises, un comptage (102) du nombre d'apparitions d'au moins un état logique étant réalisé au niveau de la mémoire tampon (1) .

7. Procédé de transmission selon la revendication 6 dans lequel le comptage se fait en parallèle sur différents secteurs distincts de la trame de manière à réduire le temps de comptage.

8. Dispositif de transmission comprenant
- des moyens de détermination du nombre d'apparitions de chaque état logique dans une trame de données à transmettre,
- des moyens de modulation à largeurs d'impulsions pour associer à un premier et un deuxième états logiques respectifs des données binaires de la trame à transmettre, au moins une première et une deuxième largeurs d'impulsions distinctes, l'état logique ayant le plus grand nombre d'apparitions dans la trame étant associé à la largeur d'impulsion la plus faible,
- des moyens d'encodage dans un emplacement dédié de la trame de la convention choisie indiquant la correspondance entre un état logique et une largeur d'impulsion,
- des moyens de transmission d'un signal correspondant à la trame de données vers au moins un dispositif de réception.

9. Dispositif de réception comprenant
- des moyens de réception d'un signal correspondant à la trame de données transmis par un dispositif de transmission,
- des moyens de décodage de l'information correspondant à la convention choisie indiquant la correspondance entre un état logique et une largeur d'impulsion située dans un emplacement dédié de la trame,
- des moyens de démodulation des données de la trame en fonction de la convention choisie.

10. Equipement de communication comprenant au moins un dispositif de transmission selon la revendication 8 et au moins un dispositif de réception selon la revendication 9.
